Europäisches Patentamt

European Patent Office

Office européen des brevets

(19)

(11) Veröffentlichungsnummer: **0 015 532**
**B1**

(12) **EUROPÄISCHE PATENTSCHRIFT**

(45) Veröffentlichungstag der Patentschrift:
**21.09.83**

(51) Int. Cl.³: **H 01 G 4/24,** H 01 G 4/18

(21) Anmeldenummer: **80101066.1**

(22) Anmeldetag: **03.03.80**

(54) Verfahren zum Herstellen eines elektrischen Schichtkondensators.

(30) Priorität: **05.03.79 DE 2908467**

(43) Veröffentlichungstag der Anmeldung:
**17.09.80 Patentblatt 80/19**

(45) Bekanntmachung des Hinweises auf die Patenterteilung:
**21.09.83 Patentblatt 83/38**

(84) Benannte Vertragsstaaten:
**AT CH FR GB IT SE**

(56) Entgegenhaltungen:
**DE-A-2 652 383**
**FR-A-1 448 599**
**US-A-3 326 718**

(73) Patentinhaber: **SIEMENS AKTIENGESELLSCHAFT,**
**Berlin und München Wittelsbacherplatz 2,**
**D-8000 München 2 (DE)**

(72) Erfinder: **Behn, Reinhard, Dipl.-Phys.,**
**Frasdorferstrasse 6d, D-8000 München 90 (DE)**
Erfinder: **Pachonik, Horst, Dipl.-Phys., Lindenring 135,**
**D-8021 Taufkirchen (DE)**
Erfinder: **Seebacher, Gerhard, Dr. phil.,**
**Bert-Brecht-Allee 10, D-8000 München 83 (DE)**

## Verfahren zum Herstellen eines elektrischen Schichtkondensators

Die Erfindung betrifft ein Verfahren zum Herstellen eines elektrischen Schichtkondensators, bei dem zumindest zwei gegenpolige Metallschichten und eine Dielektrikumsschicht auf ein Substrat aufgebracht werden, bei dem die Metallschichten und die Dielektrikumsschicht in Form deckungsgleicher Parallelogramme mit Hilfe einer parallelogrammförmigen Blendenöffnung aufgebracht werden, wobei jede der parallelogrammförmigen Dielektrikums- bzw. Metallschichten gegenüber den unmittelbar benachbarten Dielektrikums- bzw. Metallschichten in einer Richtung, die zu keiner Kante der Schichten parallel ist, parallelverschoben erzeugt und an zwei gegenüberliegenden Kanten jeweils die Metallschichten einer Polarität entlang Kontaktstreifen kontaktiert werden.

Ein derartiges Verfahren ist aus der US-A-3 326 718 bekannt. Die unterschiedlichen Metall- bzw. Dielektrikumsschichten werden mit verschiedenen Verdampferquellen erzeugt, wobei eine feststehende, vom Substrat beabstandet angeordnete Blende verwendet wird. Die Verdampfungsbeschichtung wird bei Drücken in der Grössenordnung von $10^{-6}$ mbar durchgeführt.

Für die Herstellung regenerierfähiger Kondensatoren ist das bekannte Verfahren nicht geeignet, weil die damit herstellbaren Dielektrikumsschichten aus Siliciumoxid nicht die gewünschten Regenerierfähigkeiten aufweisen.

Aus der DE-A1 2 652 383 ist ein Verfahren zur Herstellung von elektrisch isolierenden Schichten durch Polymerisation von Gasen, die sogenannte Glimmpolymerisation, bekannt. Derartige Dielektrikumsschichten weisen gute Regeneriereigenschaften auf. Im Gegensatz zur Verdampfungsbeschichtung erfolgt die Glimmpolymerisation bei Gasdrücken im Bereich von $10^{-1}$ bis 10 mbar. Hierbei beträgt die freie Weglänge der Moleküle nur noch ungefähr einige Mikrometer, während sie bei den niedrigeren Drücken der Verdampfungsbeschichtung im Dezimeterbereich liegt. Das aus der US-A-3 326 718 bekannte Verfahren eignet sich somit nicht zur Herstellung von Schichten mittels Glimmpolymerisation, da bei vom Substrat beabstandet angeordneten Masken eine Querdiffusion der Moleküle unter die Maske stattfinden würde, so dass die Glimmpolymerisationsschichten die Metallschichten vollständig überdecken würden und kein elektrischer Kontakt hergestellt werden könnte.

Aufgabe der Erfindung ist es, ein Verfahren der eingangs genannten Art zur Herstellung eines regenerierfähigen Kondensators anzugeben, bei dem die vorstehend aufgezeigten Schwierigkeiten nicht auftreten.

Diese Aufgabe wird erfindungsgemäss dadurch gelöst, dass die Dielektrikumsschicht durch Glimmpolymerisation hergestellt wird, dass die Blende zwischen der Herstellung von zwei aufeinanderfolgenden Schichten verschoben und dazu die Blende zumindest vor der Herstellung der Glimmpolymerisatschicht mit dem Substrat bzw. der obersten auf dem Substrat befindlichen Schicht in Berührung gebracht und nach der Beschichtung senkrecht von der Substratoberfläche weg bewegt, in einer Richtung, die zu keiner Kante der Blendenöffnung parallel ist, gegenüber dem Substrat parallelverschoben und wieder mit dem Substrat bzw. der oben liegenden Schicht in Berührung gebracht wird.

Durch die Erfindung wird der Vorteil erzielt, dass die Herstellung deckungsgleicher Schichten erfolgen kann, da eine Querdiffusion unter die Blende nicht stattfindet. Das Anheben vor dem Verschieben der Blende gewährleistet, dass die bereits aufgebrachten Schichten bei der Verschiebung durch die Blende nicht beschädigt werden. Insbesondere bei einer Vielzahl von aufgebrachten Schichten entsteht eine Erhöhung des kapazitiv wirksamen Bereiches gegenüber seiner Umgebung. Die Blende wird daher um einen Betrag senkrecht von der Substratoberfläche weg bewegt, welcher grösser ist als die Gesamtdicke der bereits aufgebrachten Schichten.

Gemäss einer Weiterbildung der Erfindung wird die zu den Kontaktstreifen senkrechte Verschiebungskomponente grösser als die zu den Kontaktstreifen parallele Verschiebungskomponente gewählt. Beispielsweise ist es vorteilhaft, wenn die zu den Kontaktstreifen senkrechte Verschiebungskomponente etwa 200 µm und die zu den Kontaktstreifen parallele Verschiebungskomponente etwa 100 µm beträgt. Die zu den Kontaktstreifen parallele Verschiebungskomponente berücksichtigt den Dickenabfall der glimmpolymeren Randschicht. Die zu den Kontaktstreifen senkrechte Verschiebungskomponente berücksichtigt zusätzlich zu dem Dickenabfall die für die Anbringung von Anschlusselementen bzw. Kontaktschichten benötigte Breite und die Toleranz des Abstandes zwischen den beiden Anschlusselementen bzw. Kontaktschichten. Hierfür steht der jeweils überstehende Teil der Metallschichten zur Verfügung. Reicht dessen Breite nicht aus, so muss der Kontaktstreifen breiter gestaltet werden als für den Dickenabfall nötig.

Genau übereinander angeordnete gleichartige Schichten werden erreicht, indem die Blende in entsprechender Reihenfolge in drei definierte Stellungen gebracht wird, von denen je eine jeweils den Metallschichten einer Polarität und die dritte allen Dielektrikumsschichten zugeordnet wird. Die Reihenfolge, gemäss der die einzelnen Stellungen eingenommen werden, wird gemäss der aufzubringenden Schichtfolge festgelegt.

Die Erfindung wird anhand von zwei Figuren näher erläutert. Sie ist nicht auf das in den Figuren gezeigte Beispiel beschränkt.

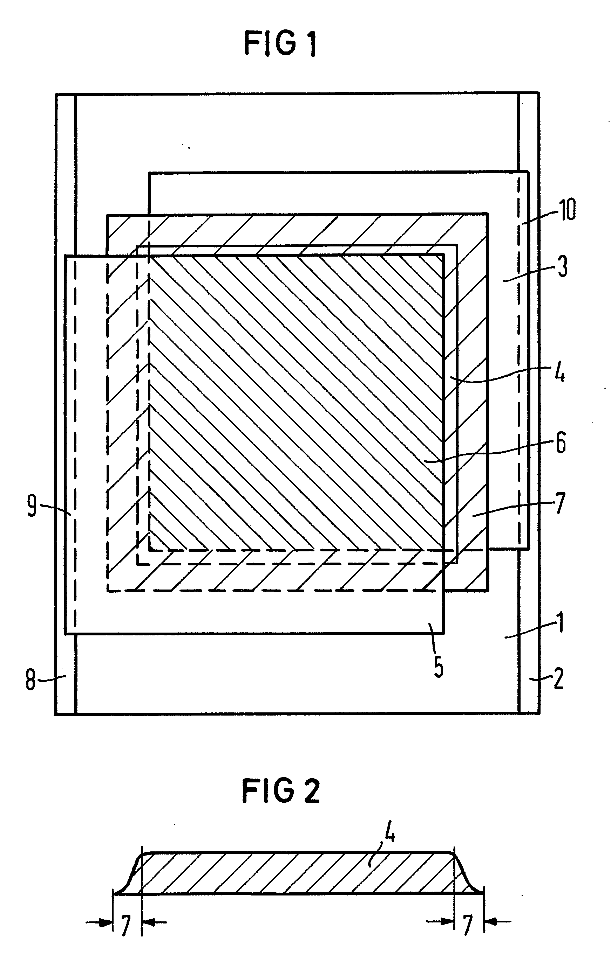

Fig. 1 zeigt einen erfindungsgemässen Kondensator schematisch,

Fig. 2 zeigt den Querschnitt durch die Dielektrikumsschicht von Fig. 1 schematisch.

Mit einem Substrat 1 eines Kondensators sind Kontaktschichten 2 und 8 stoffschlüssig verbunden. Eine erste Metallschicht 3 ist auf das Substrat aufgebracht und überlappt eine Kontaktschicht 2. Auf diese Metallschicht 3 ist eine Glimmpolymerisatschicht 4 aufgebracht. Die Glimmpolymerisatschicht 4 ist gegenüber der ersten Metallschicht 3 in einer Richtung versetzt, die zu keiner der Kanten der Metallschicht 3 parallel ist. Auf diese Glimmpolymerisatschicht 4 ist eine zweite Metallschicht 5 aufgebracht. Diese ist ebenfalls in einer Richtung gegenüber der Glimmpolymerisatschicht 4 parallelverschoben, welche zu keiner der Kanten der Glimmpolymerisatschicht 4 parallel ist. Die Verschiebung erfolgte im gezeigten Beispiel in Richtung einer Diagonale durch die quadratisch gestalteten Schichten 3 bis 5. Die schraffiert dargestellte Glimmpolymerisatschicht 4 weist Randzonen 7 auf, in denen ihre Dicke stark abnimmt und schliesslich gegen Null geht. Diese Randzonen entstehen beispielsweise beim Aufbringen der Glimmpolymerisatschicht in Blendenöffnungen. Die ausserhalb des eng schraffiert dargestellten kapazitiv wirksamen Bereiches 6 des Kondensators liegenden weit schraffiert dargestellten Teile der Glimmpolymerisatschicht 4 sind breiter als die Randzone 7 der Glimmpolymerisatschicht 4. Dadurch ist im kapazitiv wirksamen Bereich die volle Dielektrikumsstärke und damit die volle Spannungsfestigkeit gewährleistet.

Die zweite Metallschicht 6 überlappt die zweite Kontaktschicht 8 entlang einer Kante, die einen Kontaktstreifen 9 bildet. Einen entsprechenden Kontaktstreifen 10 bildet die erste Metallschicht 3 im Bereich der Überlappung mit der ersten Kontaktschicht 2.

Die durch die schräge Verschiebung der einzelnen Schichten gegeneinander erzeugten nicht kapazitiv wirksamen Teile der Beläge sind wesentlich kleiner als die bei einer Verschiebung parallel zu den nicht kontaktierten Kanten der Beläge gemäss DE-U-1 965 296 zu erzeugenden nicht kapazitiv wirksamen Streifen. Diese werden durch Überschläge und Regenerierdurchschläge im Bereich der Randzone beim Aufschliessen der Kondensatoren erzeugt.

Zum Aufschliessen der Kondensatoren wird eine zum Ausbrennen der Kurzschlüsse geeignete, über die Nennspannung reichende Spannung zwischen den Belägen angelegt. Dadurch werden gezackte Streifen ausgebrannt, deren Breite grösser sein muss als die sauber begrenzten Streifen einer erfindungsgemässen Anordnung.

Ausserdem werden durch das Aufschliessen die Kontaktstreifen grundsätzlich relativ stark belastet. Diese Belastung wird durch die Erfindung wesentlich herabgesetzt.

Die Glimmpolymerisatschichten 4 sind in der Regel wesentlich dicker als die Metallschichten 3 bzw. 5. Somit erhebt sich der durch die Glimmpolymerisatschichten 4 abgedeckte Bereich über seine Umgebung. Im kapazitiv wirksamen Bereich entsteht eine weitere Erhebung durch die dort vollzählig vorhandenen Metallschichten. Um dennoch die Blende bei der Herstellung der Kondensatoren verschieben zu können, ohne dass dadurch die bereits aufgebrachten Schichten beschädigt werden, wird die Blende vor der Verschiebung um einen Betrag angehoben, welcher grösser ist als die Summe der aufgebrachten Schichten abzüglich der Dicke der Metallschichten einer Polarität. Da die Metallschichten einer Polarität nur einen geringen Anteil der Dicke des Schichtpaketes ausmachen, wird der Einfachheit halber die Blende um mindestens die Summe der Dicken aller aufgebrachten Schichten angehoben. Dieser Wert lässt sich auch messtechnisch leicht bestimmen.

**Patentansprüche**

1. Verfahren zum Herstellen eines elektrischen Schichtkondensators, bei dem zumindest zwei gegenpolige Metallschichten und eine Dielektrikumsschicht auf ein Substrat aufgebracht werden, bei dem die Metallschichten und die Dielektrikumsschicht in Form deckungsgleicher Parallelogramme mit Hilfe einer parallelogrammförmigen Blendenöffnung aufgebracht werden, wobei jede der parallelogrammförmigen Dielektrikums- bzw. Metallschichten gegenüber den unmittelbar benachbarten Dielektrikums- bzw. Metallschichten in einer Richtung, die zu keiner Kante der Schichten parallel ist, parallelverschoben erzeugt und an zwei gegenüberliegenden Kanten jeweils die Metallschichten einer Polarität entlang Kontaktstreifen kontaktiert werden, dadurch gekennzeichnet, dass die Dielektrikumsschicht durch Glimmpolymerisation hergestellt wird, dass die Blende zwischen der Herstellung von zwei aufeinanderfolgenden Schichten verschoben und dazu die Blende zumindest vor der Herstellung der Glimmpolymerisatschichten mit dem Substrat bzw. der obersten auf dem Substrat befindlichen Schicht in Berührung gebracht und nach der Beschichtung senkrecht von der Substratoberfläche weg bewegt, in einer Richtung, die zu keiner Kante der Blendenöffnung parallel ist, gegenüber dem Substrat parallelverschoben und wieder mit dem Substrat bzw. der oben liegenden Schicht in Berührung gebracht wird.

2. Verfahren nach Anspruch 1, dadurch gekennzeichnet, dass die zu den Kontaktstreifen senkrechte Verschiebungskomponente grösser als die zu den Kontaktstreifen parallele Verschiebungskomponente gewählt wird.

3. Verfahren nach Anspruch 2, dadurch gekennzeichnet, dass die zu den Kontaktstreifen senkrechte Verschiebungskomponente etwa 200 μm und die zu den Kontaktstreifen parallele Verschiebungskomponente etwa 100 μm beträgt.

4. Verfahren nach einem der Ansprüche 1 bis 3, dadurch gekennzeichnet, dass die Blende in entsprechender Reihenfolge in drei definierte Stellungen gebracht wird, von denen je eine jeweils die Metallschichten einer Polarität und die dritte allen Dielektrikumsschichten zugeordnet wird.

5. Verfahren nach einem der Ansprüche 1 bis 4, gekennzeichnet durch die Verwendung einer Blende mit rechteckförmiger Öffnung.

6. Verfahren nach Anspruch 5, gekennzeichnet durch die Verwendung einer Blende mit quadratischer Öffnung.

## Claims

1. A process for the production of an electrical layer capacitor, in which at least two metal layers of opposite polarity and a dielectric layer are applied to a substrate, the metal layers and the dielectric layer being applied in the form of parallelograms of equal coverage with the aid of a parallelogram-shaped diaphragm aperture; in which relative to the immediately adjacent dielectric and metal layers, each of the parallelogram-shaped dielectric and metal layers is produced so as to be displaced in parallel in a direction which is not parallel to any edge of the layers; and in which, at two opposite edges, the metal layers of respective polarities are contacted along respective contact strips, characterised in that the dielectric layer is produced by glow polymerization; and that the diaphragm is displaced between the production of two successive layers and, for this purpose, at least before the production of the glow polymerization layers, the diaphragm is brought into contact with the substrate, or the uppermost layer arranged on the substrate, as the case may be, and, after formation of the layer, is moved perpendicularly away from the substrate surface, is displaced relative to the substrate parallel thereto, in a direction which is not parallel to any edge of the diaphragm aperture, and is again brought into contact with the substrate, or the overlying layer, as the case may be.

2. A process as claimed in Claim 1, characterised in that the component of the displacement which is perpendicular to the contact strips, is selected to be greater than the component of the displacement which is parallel to the contact strips.

3. A process as claimed in Claim 2, characterised in that the component of the displacement, which is perpendicular to the contact strips is approximately 200 μm, and the component of the placement which is parallel to the contact strips is approximately 100 μm.

4. A process as claimed in one of Claims 1 to 3, characterised in that the diaphragm is brought into three predetermined positions in an appropriate succession, a respective one of which positions is assigned to the metal layers of one polarity and the third of which positions is assigned to all dielectric layers.

5. A process as claimed in one of Claims 1 to 4, characterised by the use of a diaphragm having a rectangular aperture.

6. A process as claimed in Claim 5, characterised by the use of a diaphragm having a square aperture.

## Revendications

1. Procédé pour fabriquer un condensateur électrique à couches, dans lequel au moins deux couches métalliques de polarité opposée et une couche diélectrique sont déposées sur un substrat, dans lequel les couches métalliques et la couche diélectrique sont déposées sous la forme de parallèlogrammes égaux, à l'aide d'une ouverture de cache en forme de parallèlogramme, chacune des couches diélectriques ou métalliques en forme de parallèlogramme étant formée en étant décalée parallèlement par rapport aux couches diélectriques ou métalliques directement voisines, dans une direction qui n'est parallèle à aucun bord des couches, et les couches métalliques d'une polarité étant respectivement mises en contact, au niveau de deux bords opposés, suivant des bandes de contact, caractérisé par le fait que la couche diélectrique est fabriquée par polymérisation sous effluves, que le cache est déplacé entre la fabrication de deux couches successives, et qu'à cet effet le cache est amené en contact avec le substrat ou la couche supérieure se trouvant sur le substrat, au moins avant la fabrication de la couche de polymérisat obtenu sous effluves, et est enlevé perpendiculairement de la surface du substrat après dépôt de la couche, est déplacé par rapport au substrat suivant une direction qui n'est parallèle à aucun des bords de l'ouverture du cache, et est remise en contact avec le substrat ou la couche supérieure.

2. Procédé suivant la revendication 1, caractérisé par le fait que la composante de déplacement perpendiculaire à la bande de contact est choisie plus importante que la composante de déplacement parallèle à la bande de contact.

3. Procédé suivant la revendication 2, caractérisé par le fait que la composante perpendiculaire à la bande de contact est égale à environ 200 μ, et la composante de déplacement parallèle à la bande de contact est égale à environ 100 μ.

4. Procédé suivant l'une des revendications 1 à 3, caractérisé par le fait que le cache est amené, dans un ordre correspondant, dans trois positions définies dont une position respective est associée respectivement aux couches métalliques d'une polarité et la troisième est associée à toutes les couches diélectriques.

5. Procédé suivant l'une des revendications 1 à 4, caractérisé par l'utilisation d'un cache possédant une ouverture rectangulaire.

6. Procédé suivant la revendication 5, caractérisé par l'utilisation d'un cache possédant une ouverture carrée.

# FIG 1

# FIG 2